(19) Europäisches Patentamt
European Patent Office
Office européen des brevets

(11) EP 2 608 950 B1

(12) EUROPÄISCHE PATENTSCHRIFT

(45) Veröffentlichungstag und Bekanntmachung des Hinweises auf die Patenterteilung:
02.12.2015 Patentblatt 2015/49

(21) Anmeldenummer: 11729588.1

(22) Anmeldetag: 21.06.2011

(51) Int Cl.:
B29D 29/00 (2006.01)   B29C 43/28 (2006.01)
B29C 43/48 (2006.01)   B29C 47/02 (2006.01)
B29C 47/06 (2006.01)   B29C 70/50 (2006.01)

(86) Internationale Anmeldenummer:
PCT/EP2011/060296

(87) Internationale Veröffentlichungsnummer:
WO 2012/025278 (01.03.2012 Gazette 2012/09)

(54) **LASTZUGSYSTEM**

PULLING SYSTEM

SYSTEME DE TIRAGE

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR

(30) Priorität: 12.10.2010 DE 102010042357
27.08.2010 DE 102010035683

(43) Veröffentlichungstag der Anmeldung:
03.07.2013 Patentblatt 2013/27

(73) Patentinhaber: SGL Carbon SE
65201 Wiesbaden (DE)

(72) Erfinder:
• REIF, Bernd
82288 Kottgeisering (DE)
• GOJNY, Florian, Dr.
65779 Kelkheim (DE)
• SCHMIDT, Tobias
86391 Stadtbergen (DE)

(56) Entgegenhaltungen:
EP-A1- 2 305 591        WO-A1-2010/072690
DE-A1-102004 030 722    DE-U1- 29 924 751

**Beschreibung**

Die vorliegende Erfindung betrifft ein Lastzugsystem, z.B. Aufzugsystem, mit wenigstens einem Riemen, an welchen eine Zuglast angelegt ist, und mit wenigstens einer Umlenkungseinrichtung, um die herum der Riemen geführt ist.

Ein Lastzugsystem gemäß dem Oberbegriff des Anspruchs 1 ist in der DE 299 24 751 U1 offenbart. Aus dieser Schrift ist es bekannt, in einem Lastzugsystem einen Riemen einzusetzen, der eine Matrix und eine in die Matrix eingebettete, die Zuglast aufnehmende Faserstruktur mit mehreren Aramidfasern umfasst, welche eine hohe Zugbelastbarkeit aufweisen, gleichzeitig aber empfindlich gegenüber Kompressionen sind.

In der EP 2 305 591 A1 offenbart einen Riemen für Aufzugsanlagen, bei dem die Belastung bei der Umlenkung dadurch vermindert werden soll, dass er einen ersten Teilriemen mit in Längsrichtung angeordneten Rillen aufweist, dass die Zugträger in den Rillen angeordnet sind und, dass er einen zweiten Teilriemen umfasst, der derart mit dem ersten Teilriemen verbunden ist, dass die Zugträger im Inneren des Riemens aufgenommen sind (EP 2 305 591 A1, Absatz 9 und 11).

Die DE 10 2004 030 722 A1 offenbart ebenfalls einen Riemen, welcher aus zwei Teilriemen aufgebaut ist, wobei der erste Teilriemen Nuten aufweist, die durch das plastifizierbare Material des zweiten Teilriemens aufgefüllt sind, wodurch sind eine bessere Verbindung der Teilriemen ergeben soll (DE 10 2004 030 722 A1, Absatz 15).

Die WO 2010/072690 A1 lehrt ein Aufzugstragmittel mit einem polymeren Mantelkörper und darin eingebettete in Längsrichtung des Tragmittels erstreckende Zugträger aus mit Garne verseilte Litzen aufweist, wobei die Garne aus Filamenten synthetischer oder mineralischer Fasermaterialien gebildet sind (WO 2010/072690 A1, Zusammenfassung).

Bei bekannten Lastzugsystemen mit Riemen, in denen kompressionsempfindliche Fasern verwendet werden, wird üblicherweise eine verhältnismäßig geringe Lebensdauer der Riemen beobachtet, was ein gewisses Risiko in sicherheitsrelevanten Anwendungen, wie z.B. bei Personenaufzugsystemen, darstellt.

Die Aufgabe der vorliegenden Erfindung besteht deshalb in der Bereitstellung eines Lastzugsystems, welches langfristig zuverlässig und sicher arbeitet.

Erfindungsgemäß wird diese Aufgabe durch ein Lastzugsystem mit den Merkmalen des Patentanspruchs 1 gelöst. Das erfindungsgemäße Lastzugsystem, welches beispielsweise ein Aufzugsystem sein kann, umfasst wenigstens einen Riemen, an welchen eine Zuglast angelegt ist, welcher eine Matrix und eine in die Matrix eingebettete lasttragende Faserstruktur mit mehreren Kohlenstofffasern umfasst und welcher so um wenigstens eine Umlenkungseinrichtung herum geführt ist, dass er einen gekrümmten Abschnitt im Bereich der Umlenkungseinrichtung aufweist.

Erfindungsgemäß sind die Dimensionierung des Riemens und die angelegte Zuglast derart aneinander angepasst, dass in dem gekrümmten Abschnitt des Riemens eine Spannungsnulllinie des Riemens gegenüber einer Mittellinie der lasttragenden Faserstruktur um einen Betrag von wenigstens 25 % der Dicke der lasttragenden Faserstruktur in Krümmungsrichtung radial nach innen verschoben ist.

Unter der lasttragenden Faserstruktur wird hier die Anordnung derjenigen Fasern verstanden, welche die an den Riemen angelegte Zuglast aufnehmen und somit letztlich die Zugbelastbarkeit des Riemens definieren. Die lasttragende Faserstruktur kann dabei mehrere Faser-Unterstrukturen umfassen, wie nachstehend noch erläutert wird. Wenn hierin von der Faserstruktur oder den Fasern die Rede ist, ist damit die lasttragende Faserstruktur bzw. sind die Fasern der lasttragenden Faserstruktur gemeint.

Der Erfindung liegt die Erkenntnis zugrunde, dass die reduzierte Lebensdauer eines Fasern aufweisenden Riemens insbesondere damit zusammenhängt, dass im Bereich der Umlenkungseinrichtung eine Krümmung des Riemens derart erfolgt, dass auf die weiter innen liegenden Fasern eine Druckspannung wirkt. Durch diese Druckspannung werden die innen liegenden Fasern komprimiert und die Stabilität dieser Fasern und somit des Riemens insgesamt beeinträchtigt. Insbesondere besteht die Gefahr, dass Fasern innerhalb des Riemens geknickt werden. Die Kompression der innen liegenden Fasern hat folglich einen negativen Einfluss auf die Langzeitstabilität des Riemens und auf die langfristige sichere Funktion des Lastzugsystems als Ganzes.

Der allgemeine Erfindungsgedanke besteht nun darin, die Spannungsnulllinie des Riemens in dem gekrümmten Abschnitt durch eine geeignete Dimensionierung von Riemen und angelegter Zuglast soweit wie möglich in Krümmungsrichtung radial nach innen zu verschieben. Die Spannungsnulllinie definiert den Bereich des Riemens, an dem sich Zugspannungen und Druckspannungen in dem Riemen gerade aufheben. Die Spannungsnulllinie teilt somit die Querschnittsfläche des Riemens in einen unter Druckspannung stehenden Bereich und einen unter Zugspannung stehenden Bereich auf. Durch die Verschiebung der Spannungsnulllinie radial nach innen wird folglich der Anteil der in dem gekrümmten Abschnitt des Riemens komprimierten, d.h. unter Druckspannung stehenden Fasern minimiert.

Idealerweise sollte keine der Fasern der lasttragenden Faserstruktur in dem gekrümmten Abschnitt komprimiert sein, d.h. die Spannungsnulllinie sollte am krümmungsinneren Rand der Faserstruktur oder noch weiter innen verlaufen. Es wurde jedoch festgestellt, dass ein geringer Anteil von krümmungsinnenseitig der Spannungsnulllinie liegenden komprimierten Fasern toleriert werden kann, da der durch die wenigen komprimierten Fasern hervorgerufene Riemenverschleiß dann so gering ausfällt, dass die langfristige Zugstabilität des Riemens zumindest nicht wesentlich beeinträchtigt wird.

Um eine in Bezug auf die Dicke der Faserstruktur ausreichende Verschiebung der Spannungsnulllinie nach innen zu bewirken, kann ein dünnerer Riemen verwendet werden, wobei die erforderliche Tragfähigkeit des Riemens gleichzeitig durch eine entsprechende Erhöhung der Riemenbreite gewährleistet werden kann. Die Reduzierung der Riemendicke bewirkt, dass auch im gekrümmten Abschnitt des Riemens der überwiegende Teil der lasttragenden Fasern unter Zugspannung steht.

Die Erfindung sieht für eine dauerhaft zuverlässige Funktion des Riemens in kontraintuitiver Weise also keine Verwendung von dickeren Riemen bei größeren Zuglasten vor, sondern vielmehr eine dünnere - und gegebenenfalls breitere - Ausgestaltung des Riemens, die dazu führt, dass ein möglichst geringer Anteil von Fasern in einem gekrümmten Riemenabschnitt unter einer Druckspannung steht. Alternativ oder zusätzlich kann eine zusätzliche Zuglast an den Riemen angelegt und/oder der Rollendurchmesser der Umlenkungseinrichtung angeglichen werden. Die Verschiebung der Spannungsnulllinie in dem gekrümmten Abschnitt lässt sich abhängig von den Eigenschaften des Lastzugsystems wie nachfolgend beschrieben berechnen. Es wird für das nachfolgende Beispiel ein symmetrischer Riemen angenommen, bei dem die Mitte der Faserstruktur mit der Mitte des Riemens übereinstimmt und der über eine Umlenkrolle mit konstantem Radius um 180° umgelenkt wird.

Über den Umlenkungswinkel von 180° betrachtet ergibt sich ein Längenunterschied $\Delta d$ zwischen der am weitesten krümmungsaußenseitig gelegenen Faser und der am weitesten krümmungsinnenseitig gelegenen Faser der Faserstruktur zu

$$\Delta d = (r_{aussen} - r_{innen}) \cdot \pi \qquad (1)$$

wobei $r_{aussen}$ der Abstand der äußersten Faser vom Krümmungsmittelpunkt und $r_{innen}$ der Abstand der innersten Faser vom Krümmungsmittelpunkt ist.

Die durch die Krümmung bzw. Biegung des Riemens bewirkte Änderung $\Delta d_b$ der Länge der äußersten und innersten Faser gegenüber ihrem entspannten Zustand ergibt sich hieraus zu

$$\Delta d_b = +\frac{\Delta d}{2} \qquad \text{bzw.} \qquad \Delta d_b = -\frac{\Delta d}{2}. \qquad (2)$$

Die entsprechende Dehnung $\varepsilon_b$ der äußersten und innersten Faser ergibt sich daraus zu

$$\varepsilon_b = \frac{+\left|\Delta d_b\right|}{\dfrac{r_{Rolle} \cdot 2\pi}{360°} \cdot 2\alpha} \qquad \text{bzw.} \qquad \varepsilon_b = \frac{-\left|\Delta d_b\right|}{\dfrac{r_{Rolle} \cdot 2\pi}{360°} \cdot 2\alpha} \qquad (3)$$

wobei $r_{Rolle}$ der Außenradius der Rolle ist und $\alpha$ der halbe Umschlingungswinkel des Riemens um die Rolle ist, d.h. in diesem Beispiel $\alpha = 90°$.

Die durch die Biegung hervorgerufene Spannung $\sigma_b$ der innersten und äußersten Faser ergibt sich daraus zu

$$\sigma_b = +E_b \cdot \left| \varepsilon_b \right| \qquad \text{bzw.} \qquad \sigma_b = -E_b \cdot \left| \varepsilon_b \right| \qquad (4)$$

wobei $E_b$ der Biegemodul des Riemens ist, welcher sich wie folgt berechnet

$$E_b = \frac{\sum\limits_{i=1}^{n} E_{IIi} \cdot I_i}{I_{ges}} \qquad (5)$$

wobei n die Anzahl der Schichten $i$ des Riemens ist, der z.B. eine obere und eine untere Matrixschicht umfasst sowie eine Schicht, in der die Faserstruktur enthalten ist, wobei $E_{IIi}$ der Elastizitätsmodul der Schicht $i$ in Faserrichtung ist, wobei $I_i$ das Widerstandsmoment der Schicht $i$ gegenüber Biegung ist und wobei $I_{ges}$ das Widerstandsmoment des gesamten Riemens gegenüber Biegung ist.

Die in der äußersten und innersten Faser insgesamt wirksame Spannung $\sigma_{eff}$ ergibt sich durch eine Überlagerung der durch die Biegung hervorgerufenen Spannung und der durch die Zuglast hervorgerufenen Spannung, d.h.

$$\sigma_{eff} = \sigma_N + |\sigma_b| \qquad \text{bzw.} \qquad \sigma_{eff} = \sigma_N - |\sigma_b|. \qquad (6)$$

$\sigma_N$ bezeichnet dabei die durch die Normalkraft der Zuglast hervorgerufene Spannung, die sich z.B. im Falle einer durch einen Lastkörper mit der Masse $m_{Last}$ gebildeten und von der Faserstruktur aufgenommenen Zuglast als

$$\sigma_N = \frac{m_{Last} \cdot g}{A_{Riemen}} \qquad (7)$$

ergibt.

Dabei bezeichnet $g$ die Erdbeschleunigung und $A_{Riemen}$ die lasttragende Querschnittsfläche des Riemens, näherungsweise also die Querschnittsfläche der Faserstruktur.

Aus den obigen Gleichungen (6) und (7) ergibt sich unter Annahme eines linearen Verlaufs der Spannung in der Faserstruktur in radialer Richtung von der äußersten zu der innersten Faser eine Verschiebung e der Spannungsnulllinie gegenüber der Mittellinie zu

$$e = \frac{r_{aussen} - r_{innen}}{2} - \frac{-(r_{aussen} - r_{innen})}{(\sigma_N - |\sigma_b|) - (\sigma_N + |\sigma_b|)} \cdot (\sigma_N + |\sigma_b|), \qquad (8)$$

$$e = \frac{r_{aussen} - r_{innen}}{2} - \frac{-(r_{aussen} - r_{innen})}{-2|\sigma_b|} \cdot (\sigma_N + |\sigma_b|). \qquad (8')$$

Die auf die Dicke der lasttragenden Faserstruktur, d.h. $r_{aussen}$ - $r_{innen}$, bezogene Verschiebung $\lambda$ der Spannungsnulllinie ergibt sich daraus zu

$$\lambda = \frac{e}{r_{aussen} - r_{innen}} \cdot 100\%. \qquad (9)$$

Um die Lebensdauer des Riemens in dem Lastzugsystem noch weiter zu erhöhen, können die Dimensionierung des Riemens und die angelegte Zuglast derart aneinander angepasst sein, dass in dem gekrümmten Abschnitt die Spannungsnulllinie gegenüber der Mittellinie der lasttragenden Faserstruktur um einen Betrag von wenigstens 30%, bevorzugt wenigstens 40% und besonders bevorzugt wenigstens 50% der Dicke der lasttragenden Faserstruktur in Krümmungsrichtung radial nach innen verschoben ist. In letzterem Fall ist die Spannungsnulllinie zumindest bis an den innen gelegenen Rand der lasttragenden Faserstruktur verschoben, sodass im Wesentlichen alle Fasern der lasttragenden Faserstruktur unter Zugspannung oder einer Nullbelastung stehen. Die Spannungsnulllinie kann auch noch weiter innen gelegen sein und somit außerhalb der Faserstruktur oder sogar außerhalb des Riemens verlaufen, wobei in letzterem Fall alle Bereiche des Riemens unter Zugspannung stehen.

Die im Rahmen der Erfindung erzielte Erhöhung der Lebensdauer des Riemens ist besonders ausgeprägt, wenn, wie erfindungsgemäß vorgesehen, kompressionsempfindliche Fasern in der lasttragenden Faserstruktur verwendet werden, d.h. Fasern, deren Druckbelastbarkeit deutlich geringer ist als ihre Zugbelastbarkeit. Die Matrix weist bevorzugt ein Polymermaterial auf, wobei prinzipiell Thermoplaste, Elastomere oder Duroplaste geeignet sind.

Um eine gewünschte Verschiebung der Spannungsnulllinie zu erreichen, ist es vorteilhaft, wenn nicht nur der Riemen als Ganzes, sondern vor allem die lasttragende Faserstruktur dünner und breiter als bisher ausgelegt werden. Bevorzugt liegt ein Aspektverhältnis, d.h. ein Verhältnis von Breite zu Dicke, der Faserstruktur im Bereich zwischen 2 und 100, ferner bevorzugt zwischen 20 und 60 und besonders bevorzugt zwischen 30 und 50. Der Riemen als Ganzes kann beispielsweise ein Aspektverhältnis zwischen 1 und 30, bevorzugt zwischen 2 und 20 und besonders bevorzugt etwa 10 aufweisen.

Die Dicke der Faserstruktur kann zum Beispiel weniger oder gleich dem 0,025-fachen, bevorzugt weniger oder gleich dem 0,015-fachen und besonders bevorzugt weniger oder gleich dem 0,008-fachen des Krümmungsradius des Riemens in dem gekrümmten Abschnitt betragen.

Der Riemen ist gemäß einer weiteren vorteilhaften Ausführungsform so ausgebildet, dass im unbelasteten Zustand des Riemens die Fasern der Faserstruktur durch die Matrix unter Zugspannung vorgespannt sind. Das heißt die Fasern sind so in die Matrix eingebettet, dass bereits bei unbelastetem geradem Riemen die Fasern der Faserstruktur durch die Matrix unter Zugspannung gehalten sind. Eine solche innere Vorspannung der Fasern kann z.B. dadurch erreicht werden, dass bei der Herstellung des Riemens die Fasern durch Anlegen einer Zugkraft unter Zugspannung gesetzt und in diesem vorgespannten Zustand in die Matrix eingebettet werden. Wird die angelegte Zugspannung nach der Herstellung aufgehoben, stellt sich eine innere Spannung zwischen den Fasern der Faserstruktur und dem Matrixmaterial ein. Durch Vorsehen einer solchen inneren Vorspannung kann die im Bereich des gekrümmten Abschnitts auftretende Zugspannung ergänzend zur passenden Paarung von Riemen und Zuglast im Sinne der Erfindung reguliert werden.

Die durch die Matrix ausgeübte Vorspannung der Fasern der Faserstruktur kann beispielsweise zwischen 1 bis 95 %, bevorzugt zwischen 5 bis 80 % und besonders bevorzugt zwischen 10 und 35 % der Bruchspannung der Fasern betragen.

Gemäß einer weiteren vorteilhaften Ausführungsform der Erfindung weist der Riemen wenigstens eine Druckzone auf, die an der der Umlenkungseinrichtung zugewandten Seite des Riemens angeordnet ist und die ein Material mit einem Elastizitätsmodul aufweist, der größer als der Elastizitätsmodul des Materials der Matrix ist.

Eine solche in Bezug auf die Krümmungsrichtung innen gelegene Druckzone nimmt im Bereich der Umlenkungseinrichtung auftretende Druckspannungen auf. Die Fasern der Faserstruktur geraten somit leichter unter Zugspannung und die Spannungsnulllinie wird noch weiter nach innen verschoben. Vorteilhafte Ergebnisse werden zum Beispiel erzielt, wenn der Elastizitätsmodul des Materials der Druckzone um zwischen 20% und 30% größer ist als der Elastizitätsmodul des Matrixmaterials. Die Druckzone kann auch ein anisotropes Material aufweisen, dessen Elastizität in Bezug auf Zugspannungen größer ist als seine Elastizität in Bezug auf Druckspannungen.

Die Druckzone kann beispielsweise durch eine im Wesentlichen durchgehende und sich in Längsrichtung des Riemens erstreckende Materialschicht gebildet sein. Eine besonders günstige Spannungsverteilung in dem Riemen ergibt sich außerdem, wenn die Druckzone eine Strukturierung aufweist. Die Strukturierung kann z.B. eine Zahnstruktur, eine Perforierung oder eine Faltung umfassen. Eine solche strukturierte Druckzone ist besonders geeignet, um eine Druckverformung des Riemens zuzulassen, ohne dass die Fasern der Faserstruktur unter Druckspannung geraten.

Gemäß einer weiteren vorteilhaften Ausführungsform umfasst die Druckzone eine Zahnstruktur mit mehreren Zähnen, wobei die Zähne jeweils eine Hülle und eine Füllung aufweisen, wobei die Füllung ein Material mit einem Elastizitätsmodul umfasst, der größer als der Elastizitätsmodul eines Materials der Hülle ist.

Die Strukturierung der Druckzone kann entweder an der Oberfläche des Riemens ausgebildet sein oder unterhalb der Oberfläche, z.B. durch eine durchgehende Mantelschicht abgedeckt, im Riemeninneren ausgebildet sein. Im Riemeninneren ausgebildete Strukturierungen weisen den Vorteil geringer Schmutzempfindlichkeit auf, wodurch eine höhere Verschleißbeständigkeit erreicht werden kann. Gleichzeitig werden durch das Ablaufen des Riemens auf der Umlenkungseinrichtung entstehende Laufgeräusche reduziert.

Die Druckzone ist zweckmäßigerweise so ausgelegt, dass sie eine zuverlässige Übertragung von Antriebskräften zwischen dem Riemen und der Umlenkungseinrichtung gewährleistet. Die Druckzone kann dabei insbesondere zur form- und/oder kraftschlüssigen Kraftübertragung zwischen Riemen und Umlenkungseinrichtung ausgebildet sein.

Gemäß einer weiteren Ausführungsform der Erfindung ist die Druckzone so ausgestaltet, dass sie im nicht eingebauten Zustand des Riemens eine Unterschreitung eines zulässigen Biegeradius des Riemens und damit eine Schädigung der Faserstruktur verhindert.

Eine oder mehrere Druckzonen des Riemens können an die Anforderungen des jeweiligen konkreten Lastzugsystems flexibel angepasst werden. Wenn z.B. beim Betrieb des Lastzugsystems nur ein begrenzter Längenbereich des Riemens im Zuge des Betriebs über die Umlenkungseinrichtung läuft und von dieser gekrümmt wird, kann eine Druckzone im Wesentlichen nur in diesem Bereich vorgesehen werden. Ebenso kann eine Druckzone nur auf einer Seite des Riemens vorgesehen sein, wenn der Riemen in dem Lastzugsystem nur in einer Richtung gekrümmt wird, oder es kann auf beiden Seiten des Riemens jeweils eine Druckzone vorgesehen sein, wenn der Riemen durch mehrere Umlenkungseinrichtungen in unterschiedliche Richtungen gekrümmt wird, wobei bevorzugt jede Druckzone an die maximal auftretende Krümmung in der jeweiligen Richtung angepasst ist.

In einem Lastzugsystem, in welchem der Riemen durch mehrere Umlenkungseinrichtungen mit im Wesentlichen gleichen Krümmungsradien senkrecht zu seiner Querachse in beide Richtungen gekrümmt wird, kann der Riemen um seine Querachse im Wesentlichen symmetrisch ausgebildet sein. Entsprechend kann in einem Lastzugsystem, in welchem der Riemen mit unterschiedlichen Krümmungsradien in beide Richtungen gekrümmt wird, der Riemen um die Querachse asymmetrisch aufgebaut sein.

Besonders günstige Ergebnisse hinsichtlich der Langzeitstabilität des Riemens lassen sich ferner erzielen, wenn zumindest eine und insbesondere annähernd alle Fasern der Faserstruktur im Wesentlichen in Längsrichtung des Seils orientiert sind. Dabei können mehrere Fasern des Riemens miteinander verdrillt oder unverdrillt sein. Um eine hohe Zugbelastbarkeit des Riemens zu gewährleisten, erstrecken sich mehrere und insbesondere alle Fasern der Faserstruktur bevorzugt über zumindest annähernd die gesamte Länge des Riemens.

Die Faserstruktur des Riemens kann mindestens eine Faser-Unterstruktur umfassen, die aus der Gruppe ausgewählt ist, die einen unidirektionalen Multifilamentstrang, ein verdrehtes oder unverdrehtes Multifilamentgarn, ein Gewebe, ein Gelege, ein Gewirk und ein Gestrick umfasst. Innerhalb einer Faser-Unterstruktur sind die in der Faser-Unterstruktur enthaltenen Fasern bevorzugt im Wesentlichen homogen und gleichmäßig über den Querschnitt der Struktur verteilt.

Die Dicke eines unidirektionalen Multifilamentstrangs beträgt dabei bevorzugt weniger oder gleich dem 0,008-fachen eines Krümmungsradius des Riemens in dem gekrümmten Abschnitt, welcher z.B. durch einen Radius einer Umlenkrolle der Umlenkungseinrichtung vorgegeben sein kann. Die Dicke eines verdrillten Multifilamentgarns beträgt bevorzugt weniger oder gleich dem 0,025-fachen und besonders bevorzugt weniger oder gleich dem 0,015-fachen eines Krümmungsradius des Riemens in dem gekrümmten Abschnitt. Konkret kann die Dicke einer Faser-Unterstruktur und/oder der Faserstruktur insgesamt beispielsweise zwischen 0,3mm und 2 mm betragen. Ein verdrilltes Multifilamentgarn kann zumindest bereichsweise zwischen 1 und 500, bevorzugt zwischen 30 und 120 und besonders bevorzugt zwischen 50 und 100 Schläge pro Meter Garnlänge aufweisen. Umfasst die Faserstruktur ein Gewebe, ist der Kettanteil des Gewebes vorzugsweise höher als dessen Schussanteil. Kettanteil und Schussanteil können dabei auch unterschiedliche Fasertypen umfassen, wobei z.B. der Kettanteil weitestgehend aus Kohlenstofffasern und der Schussanteil weitestgehend aus Polymerfasern oder Polyesterfasern besteht.

Die Faserstruktur kann mehrere in Querrichtung des Riemens nebeneinander angeordnete Faser-Unterstrukturen umfassen, insbesondere mehrere in Querrichtung des Riemens nebeneinander angeordnete unidirektionale Multifilamentstränge oder mehrere in Querrichtung des Riemens nebeneinander angeordnete verdrillte Multifilamentgarne. Prinzipiell kann die Faserstruktur auch mehrere in Höhenrichtung des Riemens übereinander angeordnete Faser-Unterstrukturen umfassen.

Um bei der Verwendung von verdrillten Multifilamentgarnen ein in dem Seil auftretendes Torsionsmoment zu vermeiden, weist die Faserstruktur gemäß einer vorteilhaften Ausführungsform wenigstens ein mit einem z-Schlag verdrilltes Multifilamentgarn und wenigstens ein mit einem s-Schlag verdrilltes Multifilamentgarn auf, die in Querrichtung des Riemens zueinander beabstandet sind. Die Faserstruktur kann auch mehrere mit einem z-Schlag verdrillte und mehrere mit einem s-Schlag verdrillte Multifilamentgarne umfassen, wobei sich in Querrichtung des Riemens gesehen die z-verdrillten Multifilamentgarne mit den s-verdrillten Multifilamentgarnen abwechseln.

Der Riemen kann mehrere gekrümmte Riemenabschnitte mit unterschiedlich starker Krümmung aufweisen, beispielsweise wenn mehrere Umlenkrollen mit unterschiedlichen Rollenradien verwendet werden. Dabei ist es erfindungsgemäß bevorzugt, wenn die Dimensionierung des Riemens und die angelegte Zuglast so aneinander angepasst sind, dass die Spannungsnulllinie in dem Riemenabschnitt, in dem eine maximale Krümmung auftritt, gegenüber der Mittellinie der lasttragenden Faserstruktur um wenigstens 25% der Dicke der lasttragenden Faserstruktur in Krümmungsrichtung radial nach innen verschoben ist.

Ein weiterer Gegenstand der vorliegenden Erfindung ist ein Riemen, insbesondere zur Verwendung in einem Lastzugsystem wie beispielsweise einem Personenaufzugsystem, welcher eine Matrix und eine in die Matrix eingebettete Faserstruktur mit mehreren kompressionsempfindlichen Fasern umfasst, wobei die Fasern so in die Matrix eingebettet sind, dass im unbelasteten Zustand des Riemens die Fasern der Faserstruktur durch das Matrixmaterial unter Zugspannung vorgespannt sind.

Nachfolgend wird die vorliegende Erfindung rein beispielhaft anhand von vorteilhaften Ausführungsformen unter Bezugnahme auf die beigefügten Figuren beschrieben. Dabei zeigen:

Fig. 1 eine Seitenansicht eines erfindungsgemäßen Lastzugsystems mit einem um eine Umlenkungseinrichtung geführten Riemen;

Fig. 2 einen Längsschnitt des Bereichs A von Fig. 1 mit einer Spannungsnulllinie, die durch die Mitte einer Faserstruktur des Riemens verläuft;

Fig. 3 den Längsschnitt des Bereichs A von Fig. 1 mit einer aus der Mitte der Faserstruktur verschobenen Spannungsnulllinie;

Fig. 4 eine Querschnittsansicht des Lastzugsystems entlang der Linie B-B' von Fig. 2;

Fig. 5 eine perspektivische Querschnittsansicht eines Riemens gemäß einer Ausführungsform;

Fig. 6      eine perspektivische Querschnittsansicht eines Riemens gemäß einer weiteren Ausführungsform;

Fig. 7      eine perspektivische Querschnittsansicht eines Riemens gemäß einer weiteren Ausführungsform;

Fig. 8      eine perspektivische Querschnittsansicht eines Riemens gemäß einer weiteren Ausführungsform;

Fig. 9      eine perspektivische Querschnittsansicht eines Riemens gemäß einer weiteren Ausführungsform;

Fig. 10      eine perspektivische Querschnittsansicht eines Riemens gemäß einer weiteren Ausführungsform; und

Fig. 11      eine perspektivische Querschnittsansicht eines Riemens gemäß einer weiteren Ausführungsform; und

Fig. 12a-m      Längsschnittansichten von Riemen mit verschiedenen Druckzonen.

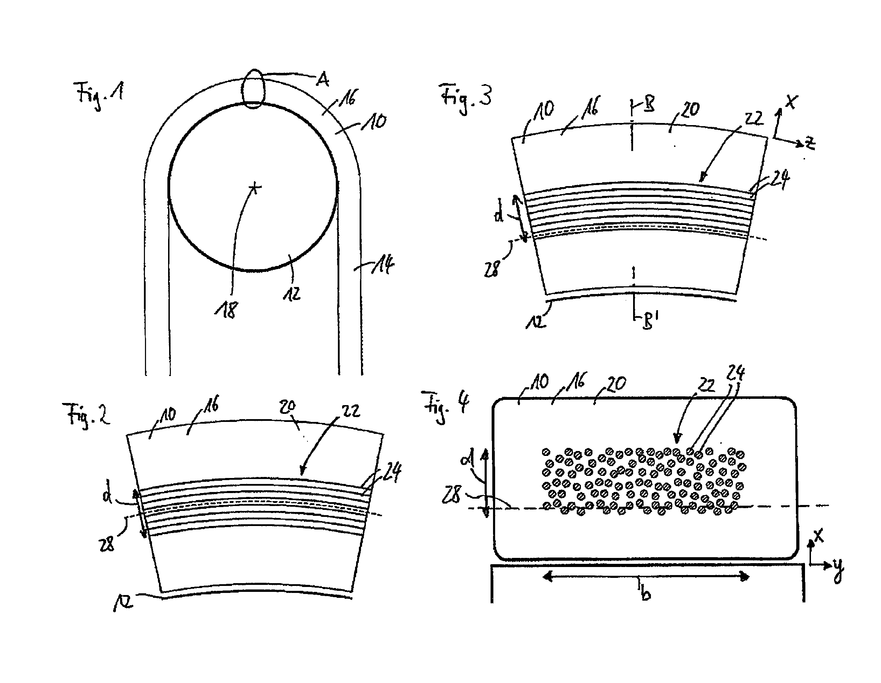

Fig. 1 zeigt schematisch eine seitliche Ansicht einer Ausführungsform eines erfindungsgemäßen Lastzugsystems, das z.B. ein Personenaufzugsystem sein kann. Das Lastzugsystem umfasst einen Riemen 10, der um eine Umlenkrolle 12 geführt ist und im Betrieb des Lastzugsystems auf der Umlenkrolle 12 abläuft. Die Umlenkrolle 12 kann um eine Drehachse 18 drehend antreibbar gelagert sein und sowohl zur Umlenkung des Riemens 10 als auch zum Antreiben des Riemens 10 ausgebildet sein. An einem Ende des Riemens 10 ist eine in Fig. 1 nicht dargestellte Last, z.B. eine Aufzugkabine mit einer Masse von beispielsweise 400 bis 700 kg, angehängt und am anderen Ende des Riemens 10 ist ein ebenfalls nicht dargestelltes Gegengewicht angehängt, dessen Masse in etwa der Masse der Last entsprechen kann.

Der Riemen 10 weist einen zu der Umlenkrolle 12 beabstandeten, im Wesentlichen geraden Abschnitt 14 und einen gekrümmten Abschnitt 16 im Bereich der Umlenkrolle 12 auf.

Wie in Fig. 2 bis 4 ersichtlich ist, umfasst der Riemen 10 eine Matrix 20 und eine in die Matrix 20 eingebettete, die angelegte Zuglast aufnehmende Faserstruktur 22 mit mehreren in Höhenrichtung x des Riemens übereinander angeordneten kompressionsempfindlichen Fasern 24. Die Faserstruktur 22 weist in Höhenrichtung x des Riemens 10 eine Dicke d und in Querrichtung y des Riemens 10 eine Breite b auf. Wie in Fig. 2 gezeigt, sind die Fasern 24 im vorliegenden Ausführungsbeispiel in Längsrichtung z des Riemens 10 orientiert. Die Fasern 24 erstrecken sich dabei über zumindest annähernd die gesamte Länge des Riemens 10.

Der besseren Übersichtlichkeit halber sind in Fig. 2 und 3 nur einige Fasern 24 dargestellt. Die tatsächliche Faseranzahl kann in der Realität deutlich höher und ihr Durchmesser im Vergleich zur Dicke d des Riemens 10 deutlich geringer sein. Wie in Fig. 2 und 3 gezeigt, führt die Umlenkung des Riemens 10 durch die Umlenkrolle 12 zu einer Krümmung des Riemens 10. Die Krümmung bewirkt eine Zugspannung in der Faserstruktur 22, die von radial außen nach radial innen im Wesentlichen linear abnimmt. Es werden also die in Bezug auf die Krümmung weiter innen liegenden Fasern 24 stärker gestaucht bzw. weniger stark gespannt als die weiter außen gelegenen Fasern 24.

Um eine erhöhte Lebensdauer des Riemens 10 zu erreichen, sind in dem dargestellten Lastzugsystem die Dimensionierung des Riemens 10 einerseits sowie das Gewicht der Last und das Gegengewicht andererseits derart aneinander angepasst, dass in dem gekrümmten Abschnitt 16 des Riemens 10 die Spannungsnulllinie 28 des Riemens 10 gegenüber der Mittellinie der lasttragenden Faserstruktur 22 in Krümmungsrichtung wie in Fig. 3 gezeigt nach innen verschoben ist. Auf die oberhalb der Spannungsnulllinie 28 gelegenen, d.h. bezogen auf die Krümmung radial weiter außen gelegenen Fasern 24 wirkt eine Zugspannung und auf die unterhalb der Spannungsnulllinie 28, d.h. in Bezug auf die Krümmung radial weiter innen gelegenen Fasern 24 wirkt eine Druckspannung. Während bei lediglich gekrümmtem aber nicht mit einer Zuglast verbundenen Riemen 10 die Spannungsnulllinie 28, wie in Fig. 2 zum Vergleich gezeigt ist, mit der Mittellinie der Faserstruktur 22 zusammenfallen würde, ist sie im vorliegenden Lastzugsystem durch die angelegte Zuglast signifikant radial nach innen, d.h. zur Umlenkrolle 12 hin verschoben, und zwar um einen Betrag von mehr als 25 % der Dicke d der Faserstruktur 22.

Im vorliegenden Lastzugsystem ist diese Verschiebung aufgrund einer entsprechenden Dimensionierung von Riemen 10 und Zuglast mit anderen Worten so ausgeprägt, dass in dem gekrümmten Abschnitt 16 nur sehr wenige Fasern 24 komprimiert und die meisten Fasern 24 unter Zugspannung stehen. Die Tragfähigkeit des Riemens 10 wird bei einer Beschädigung von Fasern 24 durch Kompression also nicht wesentlich beeinträchtigt.

Idealerweise sind der Riemen 10 und die Zuglast so aneinander angepasst, dass zumindest annähernd keine Fasern 24 in dem gekrümmten Abschnitt 16 unter Druckspannung stehen beziehungsweise die radial am weitesten innen gelegenen Fasern 24 allenfalls unter einer Nullspannung stehen. Die Spannungsnulllinie verläuft in diesem Fall also am innen gelegenen Rand der Faserstruktur oder noch weiter innen.

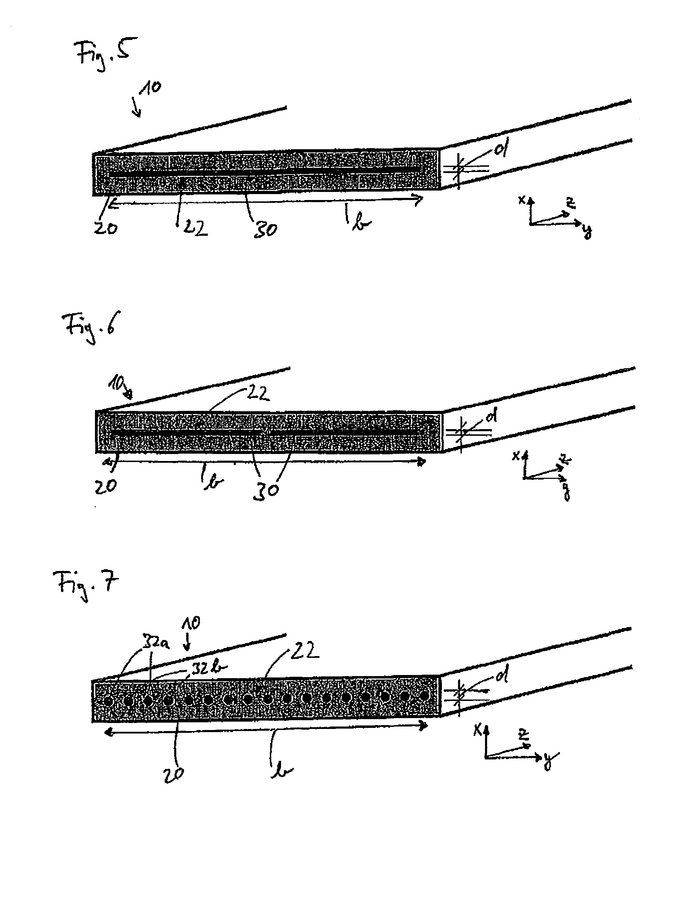

Fig. 5 zeigt eine perspektivische Querschnittsansicht eines Riemens 10 gemäß einer möglichen Ausführungsform. Die Faserstruktur 22 ist hier durch einen unidirektionalen Multifilamentstrang 30 gebildet, wobei die Fasern, welche in Fig. 5 nicht einzeln dargestellt sind, wie in Fig. 2 bis 4 in eine Matrix 20 eingebettet sind. Die Dicke d des unidirektionalen Multifilamentstrangs 30 beträgt weniger oder gleich dem 0,008-fachen des Radius einer nicht dargestellten Umlenkrolle des Lastzugsystems, um die der Riemen 10 geführt ist.

Fig. 6 zeigt eine perspektivische Querschnittsansicht einer weiteren Ausführungsform eines Riemens 10, bei der die Faserstruktur 22 zwei in Querrichtung y des Riemens nebeneinander angeordnete unidirektionale Multifilamentstränge 30 umfasst, deren Dicke d weniger oder gleich dem 0,008-fachen des Radius einer nicht dargestellten Umlenkrolle des Lastzugsystems beträgt, um die der Riemen 10 geführt ist.

Fig. 7 zeigt eine perspektivische Querschnittsansicht einer weiteren Ausführungsform eines Riemens 10, bei der die Faserstruktur 22 mehrere in Querrichtung y des Riemens nebeneinander angeordnete verdrillte Multifilamentgarne umfasst, deren Dicke d weniger oder gleich dem 0,025-fachen des Radius einer nicht dargestellten Umlenkrolle des Lastzugsystems beträgt, um die der Riemen 10 geführt ist. Dabei wechseln sich z-verdrillte Multifilamentgarne 32a und s-verdrillte Multifilamentgarne 32b in Querrichtung y betrachtet ab.

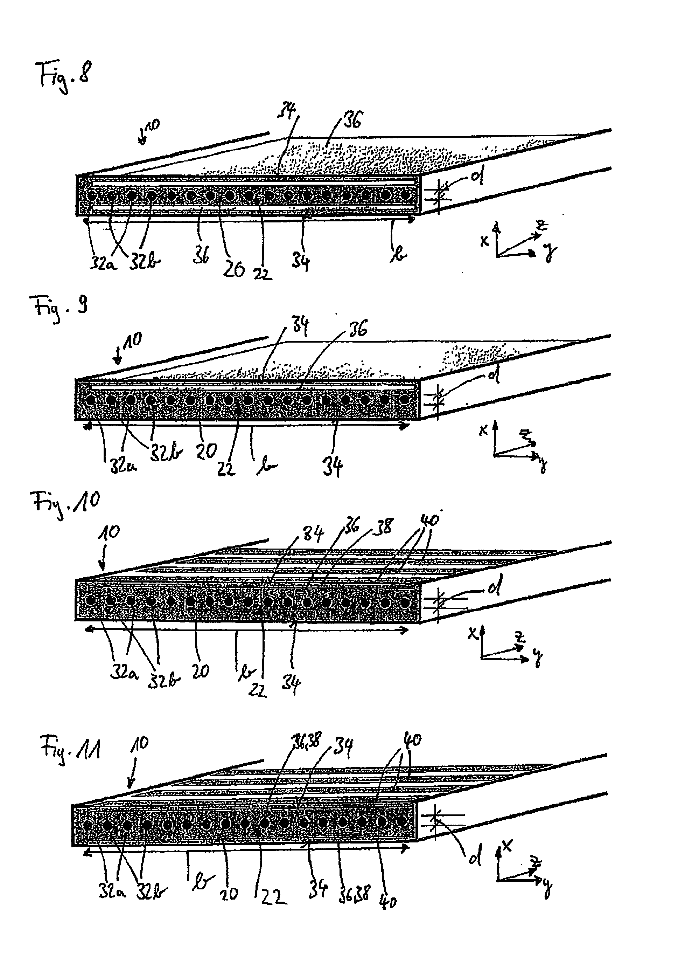

Der in Fig. 8 gezeigte Riemen 10 ist mit dem in Fig. 7 gezeigten im Wesentlichen identisch, abgesehen davon, dass der in Fig. 8 gezeigte Riemen zwei im Bereich der beiden Flachseiten 34 des Riemens 10 angeordnete Druckzonen 36 aufweist, die jeweils unter der Oberfläche des Riemens 10 ausgebildet und durch eine Mantelschicht 37 abgedeckt sind. Die Druckzonen 36 sind aus einem Material mit einem Elastizitätsmodul gebildet, der größer ist als der Elastizitätsmodul des Materials der Matrix 20. Die Druckzonen 36 verhindern somit zusätzlich eine Druckausübung auf die Fasern der Faserstruktur 22 in einem gekrümmten Abschnitt des Riemens 10. Die bezogen auf eine Krümmung innen gelegene Druckzone 36 wirkt dabei jeweils wie ein Puffer, der die auftretenden Druckkräfte aufnimmt und von den Fasern fern hält. Der Riemen 10 ist im Querschnitt gesehen symmetrisch ausgebildet, sodass der Riemen 10 gleichermaßen robust gegenüber Krümmungen in beide Richtungen um seine Querachse ist.

Der in Fig. 9 gezeigte Riemen 10 unterscheidet sich dadurch von dem in Fig. 8 gezeigten Riemen, dass nur an einer der Flachseiten 34 des Riemens 10 eine Druckzone 36 vorgesehen ist. Der Riemen 10 ist im Querschnitt gesehen also asymmetrisch ausgebildet ist. Der in Fig. 9 gezeigte Riemen 10 eignet sich somit besonders zum Einsatz in Lastzugsystemen, in denen der Riemen 10 nur in einer Richtung gekrümmt wird, wobei die Druckzone 36 vorteilhafterweise in Richtung Krümmungsinneres weisen sollte.

Fig. 10 zeigt einen Riemen 10 mit einer Druckzone 36, die durch eine an einer Flachseite 34 des Riemens 10 vorgesehene Zahnstruktur 38 gebildet ist. Dabei weisen die Zähne 40 der Zahnstruktur 38 ein Material mit einem Elastizitätsmodul auf, der größer ist als der Elastizitätsmodul des Materials der Matrix 20. Die Zahnstruktur 38 ist im vorliegenden Ausführungsbeispiel an der Oberfläche des Riemens 10 angeordnet. Prinzipiell könnte die Zahnstruktur 38 aber auch wie die in Fig. 8 und 9 gezeigten Druckzonen 36 unter der Oberfläche des Riemens 10, d.h. im Riemeninneren ausgebildet sein. Wie zuvor sollte der Riemen 10 bevorzugt so eingesetzt werden, dass die Druckzone 36 in Richtung Krümmungsinneres weist.

Fig. 11 zeigt einen Riemen 10, der auf beiden Flachseiten 34 des Riemens 10 eine wie in Fig. 10 gezeigte Zahnstruktur 38 aufweist.

Es versteht sich von selbst, dass die in Fig. 8 bis 11 gezeigten Druckzonen 36 auch bei jedem der in Fig. 1 bis 7 gezeigten Riemen 10 eingesetzt werden können.

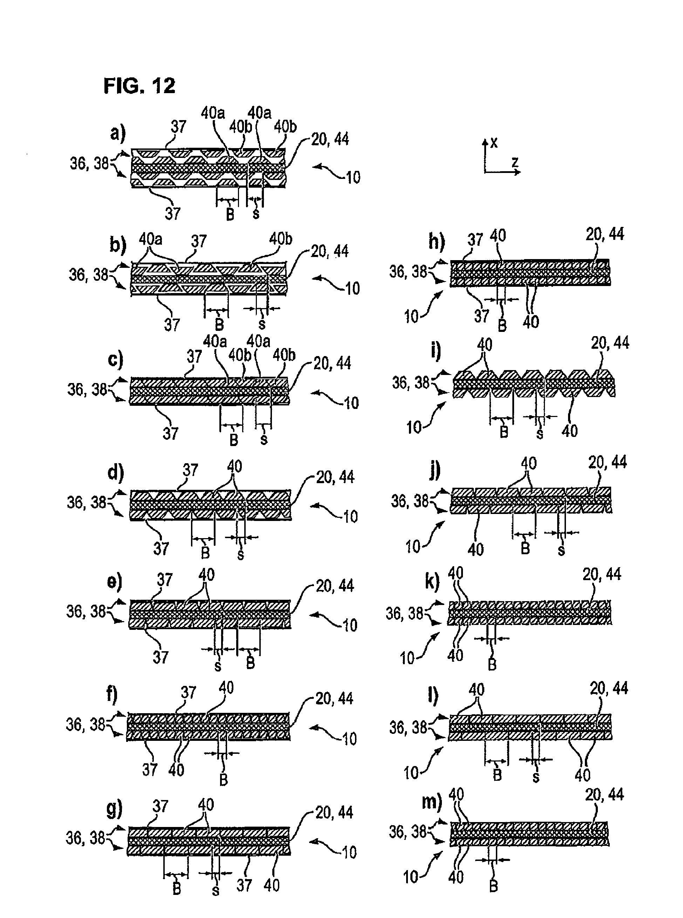

Fig. 12 zeigt unterschiedliche Riemen 10 im Längsschnitt, jeweils im unbelasteten Zustand des Riemens 10, wobei die Riemen 10 mit verschiedenen Zahnstrukturen 38 umfassenden Druckzonen 36 versehen sind. Die in Fig. 11 dargestellten Riemen weisen jeweils auf beiden Flachseiten 34 angeordneten Druckzonen 36 auf, es sind aber Riemen 10 möglich, bei denen nur auf einer der Flachseiten 34 eine entsprechende Druckzone 36 angeordnet ist.

Die Zähne 40 der Zahnstrukturen 38 sind in Querrichtung y des Riemens, d.h. senkrecht zur Zeichenebene von Fig. 12, länglich ausgebildet und erstrecken sich in dieser Richtung bevorzugt zumindest annähernd über die gesamte Breite des Riemens 10.

Wie in Fig. 12 a) bis f) und Fig. 12 i) bis k) gezeigt, weisen die Zähne 40 bevorzugt einen zumindest annähernd trapezförmigen Querschnitt auf, sie können aber auch wie in Fig. 12 g), h), l) und m) gezeigt, einen quadratischen Querschnitt aufweisen. Die Druckzonen können, wie in Fig. 12 i) bis m) gezeigt, an der Oberfläche des Riemens 10 angeordnet sein oder, wie in Fig. 12 a) bis h) gezeigt, durch eine Mantelschicht 37 abgedeckt unter der Oberfläche des Riemens 10 angeordnet sein.

Wie in Fig. 12 a) bis c) gezeigt, kann eine Verzahnung 38 zwei einander gegenüberliegende Reihen von Zähnen 40a, 40b aufweisen, wobei eine Reihe von Zähnen 40a an einem die Matrix 22 und die Faserstruktur umfassenden Grundkörper 44 des Riemens 10 angebracht ist und die andere Reihe von Zähnen 40b gegenüberliegend und von dem Grundkörper 44 entkoppelt an der Mantelschicht 37 angebracht ist. Dabei sind in jeder Reihe von Zähnen 40a bzw. 40b die Zähne 40a bzw. 40b bevorzugt derart in Längsrichtung z des Riemens 10 zueinander beabstandet angeordnet, dass zwischen zwei Zähnen 40a bzw. 40b der einen Reihe ein Zwischenraum entsteht, der zumindest annähernd komplementär zu den Zähnen 40b bzw. 40a der jeweils anderen, gegenüberliegenden Reihe ausgestaltet ist.

Die beiden Reihen von Zähnen 40a bzw. 40b können ferner so angeordnet sein, dass die Zähne 40a bzw. 40b der beiden Zahnreihen teilweise oder ganz ineinander greifen und in Längsrichtung z des Riemens 10 eine Hinterschneidung bilden, wie in Fig. 12 b) und c) gezeigt ist. Die Zahnreihen können aber auch, wie in Fig. 12 a) gezeigt, in Höhenrichtung x des Riemens 10 so beabstandet sein, dass die Zähne 40a bzw. 40b der Zahnreihen gerade nicht ineinander greifen. Wenn die Zähne 40a bzw. 40b, wie in Fig. 12 b) gezeigt, einen sich nach außen hin verbreiternden Querschnitt aufweisen, können die ineinander greifenden Reihen von Zähnen 40a bzw. 40b in Höhenrichtung x des Riemens 10 Hinterschneidungen bilden und somit die Stabilität des Riemens 10 im Bereich der Druckzonen 36 erhöhen.

Insbesondere wenn eine Zahnstruktur 38 nur eine Reihe von Zähnen 40 umfasst, können diese, wie in Fig. 12 d) bis m) gezeigt, in Längsrichtung z des Riemens 10 auch direkt aneinander angrenzen.

Die auf den beiden Flachseiten 34 angeordneten Zahnstrukturen 38 können wie in Fig. 12 a) bis e), g), i), j) und l) gezeigt in Längsrichtung z des Riemens 10 einen Versatz s zueinander aufweisen, der vorzugsweise zwischen dem 0,1-fachen und dem 0,5-fachen der Breite B eines Zahns beträgt. Die Zahnstrukturen 38 können aber auch wie in Fig. 12 f), h), k) und m) gezeigt ohne Versatz angeordnet sein.

**Bezugszeichenliste**

| 10 | Riemen |
|---|---|
| 12 | Umlenkrolle |
| 14 | gerader Abschnitt |
| 16 | gekrümmter Abschnitt |
| 18 | Drehachse |
| 20 | Matrix |
| 22 | Faserstruktur |
| 24 | Faser |
| 28 | Spannungsnulllinie |
| 30 | unidirektionaler Multifilamentstrang |
| 32a,b | verdrilltes Multifilamentgarn |
| 34 | Flachseite |
| 36 | Druckzone |
| 37 | Mantelschicht |
| 38 | Zahnstruktur |
| 40a,b | Zahn |
| 44 | Grundkörper |
| x | Höhenrichtung des Riemens |
| y | Querrichtung des Riemens |
| z | Längsrichtung des Riemens |
| b | Breite der Faserstruktur |
| d | Dicke der Faserstruktur |
| B | Breite eines Zahns |
| s | Versatz |

**Patentansprüche**

1. Lastzugsystem mit wenigstens einem Riemen (10), an welchen eine Zuglast angelegt ist, welcher eine Matrix (20) und eine in die Matrix (20) eingebettete lasttragende Faserstruktur (22) mit mehreren Fasern (24) umfasst und welcher so um wenigstens eine Umlenkungseinrichtung (12) herum geführt ist, dass er einen gekrümmten Abschnitt (16) im Bereich der Umlenkungseinrichtung (12) aufweist,
**dadurch gekennzeichnet, dass**
die Faserstruktur (22) eine oder mehrere Kohlenstofffasern (24) umfasst und
die Dimensionierung des Riemens (10) und die angelegte Zuglast derart aneinander angepasst sind, dass in dem gekrümmten Abschnitt (16) des Riemens (10) eine Spannungsnulllinie (28) des Riemens (10) gegenüber einer Mittellinie der lasttragenden Faserstruktur (22) um einen Betrag von wenigstens 25% der Dicke (d) der lasttragenden Faserstruktur (22) in Krümmungsrichtung radial nach innen verschoben ist.

2. Lastzugsystem nach Anspruch 1
**dadurch gekennzeichnet, dass**
die Dimensionierung des Riemens (10) und die angelegte Zuglast derart aneinander angepasst sind, dass in dem gekrümmten Abschnitt (16) des Riemens (10) die Spannungsnulllinie (28) gegenüber der Mittellinie der lasttragenden Faserstruktur (22) um einen Betrag von wenigstens 30%, bevorzugt wenigstens 40% und besonders bevorzugt wenigstens 50% der Dicke (d) der lasttragenden Faserstruktur (22) in Krümmungsrichtung radial nach innen verschoben ist.

3. Lastzugsystem nach Anspruch 1 oder 2,
**dadurch gekennzeichnet, dass**
im Bereich der Umlenkungseinrichtung (12) im Wesentlichen alle Fasern (24) der Faserstruktur (22) unter einer Nullbelastung oder einer Zugspannung stehen.

4. Lastzugsystem nach zumindest einem der vorstehenden Ansprüche,
**dadurch gekennzeichnet, dass**
die Faserstruktur (22) ein Aspektverhältnis im Bereich zwischen 2 und 100, bevorzugt zwischen 20 und 60 und besonders bevorzugt zwischen 30 und 50 aufweist, und/oder dass
der Riemen (10) ein Aspektverhältnis im Bereich zwischen 1 und 30, bevorzugt zwischen 2 und 20 und besonders bevorzugt von etwa 10 aufweist.

5. Lastzugsystem nach zumindest einem der vorstehenden Ansprüche,
**dadurch gekennzeichnet, dass**
die Faserstruktur (22) eine Dicke (d) aufweist, die weniger oder gleich dem 0,025-fachen, bevorzugt weniger oder gleich dem 0,015-fachen und besonders bevorzugt weniger oder gleich dem 0,008-fachen eines Krümmungsradius des Riemens (10) in dem gekrümmten Abschnitt (16) beträgt.

6. Lastzugsystem nach zumindest einem der vorstehenden Ansprüche,
**dadurch gekennzeichnet, dass**
der Riemen (10) so ausgebildet ist, dass im unbelasteten Zustand des Riemens (10) die Fasern (24) der Faserstruktur (22) durch die Matrix (20) unter Zugspannung vorgespannt sind.

7. Lastzugsystem nach Anspruch 6,
**dadurch gekennzeichnet, dass**
die durch die Matrix (20) im unbelasteten Zustand des Riemens (10) ausgeübte Vorspannung der Fasern (24) der Faserstruktur (22) zwischen 1-95%, bevorzugt zwischen 5-80% und besonders bevorzugt zwischen 10-35% der Bruchspannung der Fasern (24) beträgt.

8. Lastzugsystem nach zumindest einem der vorstehenden Ansprüche,
**dadurch gekennzeichnet, dass**
der Riemen (10) wenigstens eine Druckzone (36) aufweist, die an der der Umlenkungseinrichtung (12) zugewandten Seite des Riemens (10) angeordnet ist und ein Material mit einem Elastizitätsmodul aufweist, der größer ist als der Elastizitätsmodul des Materials der Matrix (20).

9. Lastzugsystem nach Anspruch 8,
**dadurch gekennzeichnet, dass**
die Druckzone (36) durch eine im Wesentlichen durchgehende und sich in Längsrichtung des Riemens (10) erstreckende Materialschicht gebildet ist.

10. Lastzugsystem nach Anspruch 8 oder 9,
**dadurch gekennzeichnet, dass**
die Druckzone (36) eine Strukturierung, insbesondere eine Zahnstruktur (38), Perforierung oder Faltung, aufweist.

11. Lastzugsystem nach zumindest einem der Ansprüche 8 bis 10,
**dadurch gekennzeichnet, dass**
die Druckzone (36) eine Zahnstruktur (38) mit mehreren Zähnen (40) umfasst, wobei die Zähne (40) jeweils eine Hülle und eine Füllung aufweisen, wobei die Füllung ein Material mit einem Elastizitätsmodul umfasst, der größer als der Elastizitätsmodul eines Materials der Hülle ist.

12. Lastzugsystem nach zumindest einem der vorstehenden Ansprüche,
**dadurch gekennzeichnet, dass**
die Faserstruktur (22) des Riemens (10) eine oder mehrere Faser-Unterstrukturen umfasst, die aus der Gruppe ausgewählt ist, die einen unidirektionalen Multifilamentstrang (30), ein verdrilltes oder unverdrilltes Multifilamentgarn (32), ein Gewebe, ein Gelege, ein Gewirk und ein Gestrick umfasst.

13. Lastzugsystem nach Anspruch 12,
**dadurch gekennzeichnet, dass**
die Faserstruktur (22) mehrere in Querrichtung des Riemens (10) nebeneinander angeordnete Faser-Unterstrukturen umfasst, insbesondere mehrere in Querrichtung des Riemens nebeneinander angeordnete unidirektionale Multifilamentstränge (30) und/oder mehrere in Querrichtung des Riemens (10) nebeneinander angeordnete verdrillte Multifilamentgarne (32).

14. Lastzugsystem nach Anspruch 12 oder 13,
**dadurch gekennzeichnet, dass**
die Faserstruktur (22) wenigstens ein verdrilltes Multifilmanentgarn (32) umfasst, das zumindest bereichsweise zwischen 50 und 100 Schläge pro Meter Garnlänge aufweist.

15. Lastzugsystem nach zumindest einem der vorstehenden Ansprüche,
**dadurch gekennzeichnet, dass**
die Faserstruktur (22) wenigstens ein mit einem z-Schlag verdrilltes Multifilamentgarn (32a) und wenigstens ein mit einem s-Schlag verdrilltes Multifilamentgarn (32b) umfasst, die in Querrichtung (y) des Riemens (10) zueinander beabstandet sind.

16. Lastzugsystem nach zumindest einem der vorstehenden Ansprüche
**dadurch gekennzeichnet, dass**
die Faserstruktur (22) mehrere mit einem z-Schlag verdrillte Multifilamentgarne (32a) und mehrere mit einem s-Schlag verdrillte Multifilamentgarne (32b) umfasst, wobei sich in Querrichtung des Riemens gesehen die z-verdrillten Multilfilamentgarne (32a) mit den s-verdrillten Multifilamentgarnen (32b) abwechseln.


**Claims**

1. Load-pulling system comprising at least one belt (10), to which a tensile load is applied and which comprises a matrix (20) and a load-bearing fibre structure (22), having a plurality of fibres (24), embedded in the matrix (20), and which is guided around at least one deflection device (12) so as to have a curved portion (16) in the region of the deflection device (12),
**characterised in that**
the fibre structure (22) comprises one or more carbon fibres (24) and
the dimensioning of the belt (10) and the tensile load applied thereto are matched to one another such that, in the curved portion (16) of the belt (10), a neutral axis (28) of the belt (10) is displaced, relative to a centre line of the load-bearing fibre structure (22), radially inwardly in the direction of curvature by an amount which is at least 25 % of the thickness (d) of the load-bearing fibre structure (22).

2. Load-pulling system according to claim 1,
**characterised in that**
the dimensioning of the belt (10) and the applied tensile load are matched to one another such that, in the curved portion (16) of the belt (10), the neutral axis (28) is displaced, relative to the centre line of the load-bearing fibre structure (22), radially inwardly in the direction of curvature by an amount which is at least 30 %, preferably at least 40 %, and more preferably at least 50 % of the thickness (d) of the load-bearing fibre structure (22).

3. Load-pulling system according to either claim 1 or claim 2,
**characterised in that**,
in the region of the deflection device (12), substantially all the fibres (24) of the fibre structure (22) are under zero load or a tensile stress.

4. Load-pulling system according to at least one of the preceding claims,
**characterised in that**
the fibre structure (22) has an aspect ratio in a range between 2 and 100, preferably between 20 and 60, and most preferably between 30 and 50, and/or in that
the belt (10) has an aspect ratio in a range between 1 and 30, preferably between 2 and 20, and more preferably of approximately 10.

5. Load-pulling system according to at least one of the preceding claims,
**characterised in that**
the fibre structure (22) has a thickness (d) that is less than or equal to 0.025 times, preferably less than or equal to 0.015 times, and more preferably less than or equal to 0.008 times a radius of curvature of the belt (10) in the curved portion (16).

6. Load-pulling system according to at least one of the preceding claims,
**characterised in that**
the belt (10) is designed such that, when the belt (10) is unloaded, the fibres (24) of the fibre structure (22) are prestressed under tensile stress by the matrix (20).

7. Load-pulling system according to claim 6,
**characterised in that**
the prestressing applied to the fibres (24) of the fibre structure (22) by the matrix (20) when the belt (10) is unloaded is between 1-95 %, preferably between 5-80 %, and more preferably between 10-35 % of the breaking tension of the fibres (24).

8. Load-pulling system according to at least one of the preceding claims,
**characterised in that**
the belt (10) has at least one pressure zone (36) which is arranged on the side of the belt (10) facing the deflection device (12) and comprises a material having a modulus of elasticity greater than the modulus of elasticity of the material of the matrix (20).

9. Load-pulling system according to claim 8,
**characterised in that**
the pressure zone (36) is formed by a material layer which is substantially continuous and extends in the longitudinal direction of the belt (10).

10. Load-pulling system according to either claim 8 or claim 9,
**characterised in that**
the pressure zone (36) is structured, in particular has toothed structure (38), is perforated or folded.

11. Load-pulling system according to at least one of claims 8 to 10,
**characterised in that**
the pressure zone (36) comprises a toothed structure (38) having a plurality of teeth (40), the teeth (40) having in each case a shell and a filling, the filling comprising a material having a modulus of elasticity greater than the modulus of elasticity of a material of the shell.

12. Load-pulling system according to at least one of the preceding claims,
**characterised in that**
the fibre structure (22) of the belt (10) comprises one or more fibre substructures selected from the group consisting of a unidirectional multifilament strand (30), a twisted or non-twisted multifilament yarn (32), a woven fabric, a scrim, a stitch fabric and a knitted fabric.

13. Load-pulling system according to claim 12,
**characterised in that**
the fibre structure (22) comprises a plurality of fibre substructures which are arranged next to one another in the transverse direction of the belt (10), in particular a plurality of unidirectional multifilament strands (30) which are arranged next to one another in the transverse direction of the belt, and/or a plurality of twisted multifilament yarns (32) which are arranged next to one another in the transverse direction of the belt (10).

14. Load-pulling system according to either claim 12 or claim 13,
**characterised in that**
the fibre structure (22) comprises at least one twisted multifilament yarn (32) which has, at least in regions, between 50 and 100 strokes per metre of yarn length.

15. Load-pulling system according to at least one of the preceding claims,
**characterised in that**

the fibre structure (22) comprises at least one multifilament yarn (32a) twisted by a z-stroke and at least one multifilament yarn (32b) twisted by an s-stroke, which multifilament yarns are spaced apart from one another in the transverse direction (y) of the belt (10).

16. Load-pulling system according to at least one of the preceding claims,
**characterised in that**
the fibre structure (22) comprises a plurality of multifilament yarns (32a) twisted by a z-stroke and a plurality of multifilament yarns (32b) twisted with an s-stroke, the z-twisted multifilament yarns (32a) alternating with the s-twisted multifilament yarns (32b) when viewed in the transverse direction of the belt.


**Revendications**

1. Système de traction de charge avec au moins une courroie (10), sur laquelle une charge de traction est appliquée, ladite courroie comprenant une matrice (20) et une structure fibreuse (22) de support de charges, incorporée dans la matrice (20), avec plusieurs fibres (24) et ladite courroie étant guidée autour d'au moins une unité de déflexion (12), de telle sorte qu'elle présente une section courbée (16) dans la zone de l'unité de déflexion (12),
**caractérisé en ce que**
la structure fibreuse (22) comprend une ou plusieurs fibres de carbone (24) et le dimensionnement de la courroie (10) et la charge de traction appliquée sont adaptés l'un à l'autre de telle sorte que, dans la section courbée (16) de la courroie (10), une ligne neutre de tension (28) de la courroie (10) est décalée de manière radiale vers l'intérieur, dans la direction de la courbure, vis-à-vis d'une ligne médiane de la structure fibreuse (22) de support de charges, d'une valeur d'au moins 25 % de l'épaisseur (d) de la structure fibreuse (22) de support de charges.

2. Système de traction de charge selon la revendication 1,
**caractérisé en ce que**
le dimensionnement de la courroie (10) et la charge de traction appliquée sont adaptés l'un à l'autre de telle sorte que, dans la section courbée (16) de la courroie (10), la ligne neutre de tension (28) est décalée de manière radiale vers l'intérieur, dans la direction de la courbure, vis-à-vis de la ligne médiane de la structure fibreuse (22) de support de charges, d'une valeur d'au moins 30 %, de préférence d'au moins 40 % et en particulier de préférence d'au moins 50 % de l'épaisseur (d) de la structure fibreuse (22) de support de charges.

3. Système de traction de charge selon la revendication 1 ou 2,
**caractérisé en ce que**,
dans la zone de l'unité de déflexion (12), sensiblement toutes les fibres (24) de la structure fibreuse (22) sont soumises à une charge à vide ou à une contrainte de traction.

4. Système de traction de charge selon tout au moins l'une des revendications précédentes,
**caractérisé en ce que**
la structure fibreuse (22) présente un rapport de forme dans une zone comprise entre 2 et 100, de préférence comprise entre 20 et 60 et en particulier comprise de préférence entre 30 et 50, et/ou **en ce que** la courroie (10) présente un rapport de forme dans une zone comprise entre 1 et 30, de préférence comprise entre 2 et 20 et en particulier de préférence d'environ 10.

5. Système de traction de charge selon tout au moins l'une des revendications précédentes,
**caractérisé en ce que**
la structure fibreuse (22) présente une épaisseur (d), qui est inférieure ou égale à 0,025 fois, de préférence inférieure ou égale à 0,015 fois et en particulier de préférence inférieure ou égale à 0,008 fois un rayon de courbure de la courroie (10) dans la section courbée (16).

6. Système de traction de charge selon tout au moins l'une des revendications précédentes,
**caractérisé en ce que**
la courroie (10) est conçue de telle sorte qu'à l'état non chargé de la courroie (10), les fibres (24) de la structure fibreuse (22) sont précontraintes par la matrice (20) sous une contrainte de traction.

7. Système de traction de charge selon la revendication 6,
**caractérisé en ce que**
la précontrainte des fibres (24) de la structure fibreuse (22), exercée par la matrice (20) à l'état non chargé de la courroie (10), est comprise entre 1 et 95 %, de préférence comprise entre 5 et 80 % et en particulier comprise de préférence entre 10 et 35 % par rapport à la tension de rupture des fibres (24).

8. Système de traction de charge selon tout au moins l'une des revendications précédentes,
**caractérisé en ce que**
la courroie (10) présente au moins une zone de pression (36) qui est disposée au niveau de la partie de la courroie (10) faisant face à l'unité de déflexion (12) et présente un matériau avec un module d'élasticité qui est plus grand que le module d'élasticité du matériau de la matrice (20).

9. Système de traction de charge selon la revendication 8,
**caractérisé en ce que**
la zone de pression (36) est formée par une couche de matériau pour l'essentiel continue et s'étendant dans la direction longitudinale de la courroie (10).

10. Système de traction de charge selon la revendication 8 ou 9,
**caractérisé en ce que**
la zone de pression (36) présente une structuration, en particulier une structure dentée (38), une perforation ou une pliure.

11. Système de traction de charge selon tout au moins l'une des revendications 8 à 10,
**caractérisé en ce que**
la zone de pression (36) comprend une structure dentée (38) avec plusieurs dents (40), les dents (40) présentant respectivement une enveloppe et un remplissage, le remplissage comprenant un matériau avec un module d'élasticité qui est plus grand que le module d'élasticité d'un matériau de l'enveloppe.

12. Système de traction de charge selon tout au moins l'une des revendications précédentes,
**caractérisé en ce que**
la structure fibreuse (22) de la courroie (10) comprend une ou plusieurs sous-structures fibreuses qui sont sélectionnées à partir du groupe qui comprend un toron multifilament unidirectionnel (30), un fil multifilament torsadé ou non torsadé (32), un tissu, un canevas, un tulle et un tricot.

13. Système de traction de charge selon la revendication 12,
**caractérisé en ce que**
la structure fibreuse (22) comprend plusieurs sous-structures fibreuses disposées les unes à côté des autres dans la direction transversale de la courroie (10), en particulier plusieurs torons multifilaments unidirectionnels (30), disposés les uns à côté des autres dans la direction transversale de la courroie et/ou plusieurs fils multifilaments torsadés (32), disposés les uns à côté des autres dans la direction transversale de la courroie (10).

14. Système de traction de charge selon la revendication 12 ou 13,
**caractérisé en ce que**
la structure fibreuse (22) comprend au moins un fil multifilament torsadé (32) qui présente, tout au moins par zones, entre 50 et 100 torsions par mètre de longueur de fil.

15. Système de traction de charge selon tout au moins l'une des revendications précédentes,
**caractérisé en ce que**
la structure fibreuse (22) comprend au moins un fil multifilament torsadé (32a) ayant une torsion « z » et au moins un fil multifilament torsadé (32b) ayant
une torsion « s », qui sont situés à distance l'un de l'autre dans la direction transversale (y) de la courroie (10).

16. Système de traction de charge selon tout au moins l'une des revendications précédentes,
**caractérisé en ce que**
la structure fibreuse (22) comprend plusieurs fils multifilaments torsadés (32a) ayant une torsion « z » et plusieurs fils multifilaments torsadés (32b) ayant une torsion « s », pour lequel, considéré dans la direction transversale de la courroie, les fils multifilaments torsadés (32a) ayant une torsion « z » sont disposés en alternance avec les fils multifilaments torsadés (32b) ayant une torsion « s »,

Fig. 1

A

16

10

18

12

14

Fig. 3

10  16  18  20  22

x

z

d

28

24

12

B

B'

Fig. 2

10  16  20  22

d

28

24

12

Fig. 4

10  16  20  22  24

d

28

x

y

b

Fig. 5

Fig. 6

Fig. 7

Fig. 8

Fig. 9

Fig. 10

Fig. 11

# FIG. 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 29924751 U1
- EP 2305591 A1
- DE 102004030722 A1
- WO 2010072690 A1